Europäisches Patentamt

European Patent Office

Office européen des brevets

(11) Numéro de publication: **0 573 719 A1**

# (12) DEMANDE DE BREVET EUROPEEN

(21) Numéro de dépôt: **92402922.6**

(22) Date de dépôt: **27.10.92**

(51) Int. Cl.5: **H03M 11/00, G06F 1/00, G07F 7/10**

(30) Priorité: **12.06.92 FR 9207137**

(43) Date de publication de la demande:
**15.12.93 Bulletin 93/50**

(84) Etats contractants désignés:
**BE CH DE DK ES GB GR IE IT LI LU NL PT**

(71) Demandeur: **DASSAULT AUTOMATISMES ET TELECOMMUNICATIONS**
**9, rue Elsa Triolet**
**Z.I. Les Gatines**
**F-78370 Plaisir(FR)**

(72) Inventeur: **Boccaletti, Serge**
**Résidence Brigitte,**
**33, rue des Ebisoirs**
**F-78370 Plaisir(FR)**

(74) Mandataire: **Plaçais, Jean-Yves et al**
**Cabinet Netter,**
**40, rue Vignon**
**F-75009 Paris (FR)**

(54) **Unité à clavier de sécurité perfectionnée.**

(57) L'unité comprend un clavier (CL) comportant une matrice de conducteurs de lignes et colonnes (L0-L3, C0-C3), et des touches (《0》-《15》) dont l'actionnement produit un contact ligne/colonne spécifique. Il s'y ajoute un module protégé (MP), muni de bornes bidirectionnelles (L0A-L3A, C0A-C3A) respectivement reliées individuellement aux deux extrémités des conducteurs de lignes et colonnes. Ce module est capable de placer chaque borne dans un état libéré (1) qui permet la scrutation, ou dans un état de forçage (0). Au repos, le module (MP) applique le forçage à au moins une extrémité de chaque conducteur de ligne et de colonne. Pour l'interrogation, il libère brièvement les deux extrémités d'un seul conducteur choisi de ligne ou colonne, avec scrutation de ce conducteur. C'est l'absence de changement d'état de ce conducteur pendant sa libération brève qui indique l'actionnement de l'une des touches qui lui sont associées, tandis qu'un changement d'état n'indique rien sur l'actionnement du clavier.

FIG.1

L'invention concerne les unités à clavier de sécurité, qui servent notamment à la composition de codes confidentiels.

Une telle unité comprend un clavier comportant une matrice de conducteurs de lignes et colonnes, et des touches. L'actionnement d'une touche produit un contact ligne-colonne spécifique. Dans le principe, un module relié séparément aux conducteurs de lignes et colonnes va tester la présence ou l'absence d'une liaison électrique entre les lignes et les colonnes, une par une.

Il est important de protéger un code confidentiel. Pour cela, on recourt tout d'abord à un module dit protégé: dès lors que le code est rentré dans ce module, il n'est plus accessible, ou plus reconnaissable. Mais il faut encore protéger le clavier, et la liaison clavier-module.

Une solution intéressante est décrite dans la Demande de Brevet français No 86 07901, publiée sous le N° 2 599 525. Le module protégé est muni de bornes bidirectionnelles respectivement reliées individuellement aux conducteurs de lignes et colonnes. Ce module est capable de placer chaque borne dans un état libéré, qui autorise la scrutation de l'état du conducteur de ligne ou colonne, ou dans un état de forçage. On peut alors scruter une borne de l'un des jeux (colonnes ou lignes), tout en forçant une borne de l'autre jeu (lignes ou colonnes, respectivement). Si le forçage se propage de ligne à colonne, c'est que la touche est actionnée. A côté de cela, une simulation de touche actionnée est obtenue en forçant simultanément une borne du jeu de lignes et une borne du jeu de colonnes.

La présente invention a pour but d'améliorer encore, et substantiellement, la sécurité d'un tel dispositif.

Un premier but de l'invention est de faire en sorte que l'état réel du clavier ne puisse être détecté par analyse des courants traversant les conducteurs.

Un second but de l'invention est de rendre quasi indistinctes les phases de contrôle réel de l'actionnement d'une touche et celles de simulation.

L'invention a également pour but de permettre la circulation dans les conducteurs de courant divers et variés, sans aucun rapport avec l'actionnement réel des touches.

L'invention a aussi pour but de permettre le contrôle de l'actionnement d'une touche sans qu'aucun changement de l'état du clavier ne soit détectable, ni en tension, ni en courant.

Enfin, l'invention vise aussi à permettre de tester l'intégrité du clavier, aussi bien intrinsèquement que vis-à-vis d'une éventuelle fraude.

Selon une première caractéristique de l'invention, l'un au moins des conducteurs de lignes ou colonnes est relié à deux bornes différentes du module protégé, par ses deux extrémités; ces deux bornes sont chacune susceptibles de libération ou de forçage (état 1 ou 0). Le forçage ou état 0 est une liaison directe à une tension de référence, par exemple la masse. Au moins l'une de ces deux bornes est susceptible de scrutation. Ceci permet de faire passer un courant dans le conducteur considéré, indépendamment de l'actionnement des touches, et ce y compris pendant la simulation.

De préférence, tous les conducteurs sont ainsi montés. Un ajustement de courant, par exemple par résistance, est effectué aux deux extrémités de chaque conducteur. En principe, les deux bornes du module sont différentes pour chacun des conducteurs. En d'autres termes, chaque conducteur est associé à une paire de bornes du module, et réciproquement.

Selon un autre aspect de l'invention, en mode normal, le module applique à chaque conducteur de ligne ou colonne l'un des trois états comportant un forçage à au moins une extrémité de ce conducteur. En effet, du fait qu'on peut appliquer une scrutation ou un forçage à chacune des deux extrémités d'un conducteur, il existe trois états différents permettant de forcer ce conducteur par au moins l'une de ces extrémités. De ce fait, l'actionnement d'une touche ne produit pas de changement détectable (de façon significative) en tension ou en courant.

D'autres caractéristiques et avantages de l'invention apparaîtront à l'examen de la description détaillée ci-après et des dessins annexés, sur lesquels :

- la figure 1 est le schéma électrique de l'interconnexion entre un clavier et son module protégé;
- la figure 2 est un schéma électrique simplifié de la commande de l'une de ces bornes par le module protégé;
- la figure 3 est un tableau d'état;
- la figure 4 est un schéma général du mécanisme de surveillance du clavier par le module protégé;
- les figures 5, 5A et 6 sont deux détails du mécanisme de la figure 4; et
- la figure 7 est un diagramme temporel illustrant sur un exemple le fonctionnement du dispositif selon l'invention.

Les dessins annexés sont, pour l'essentiel, de caractère certain. En conséquence, ils font partie intégrante de la description. Ils pourront donc non seulement servir à mieux faire comprendre celle-ci, mais aussi contribuer à la définition de l'invention.

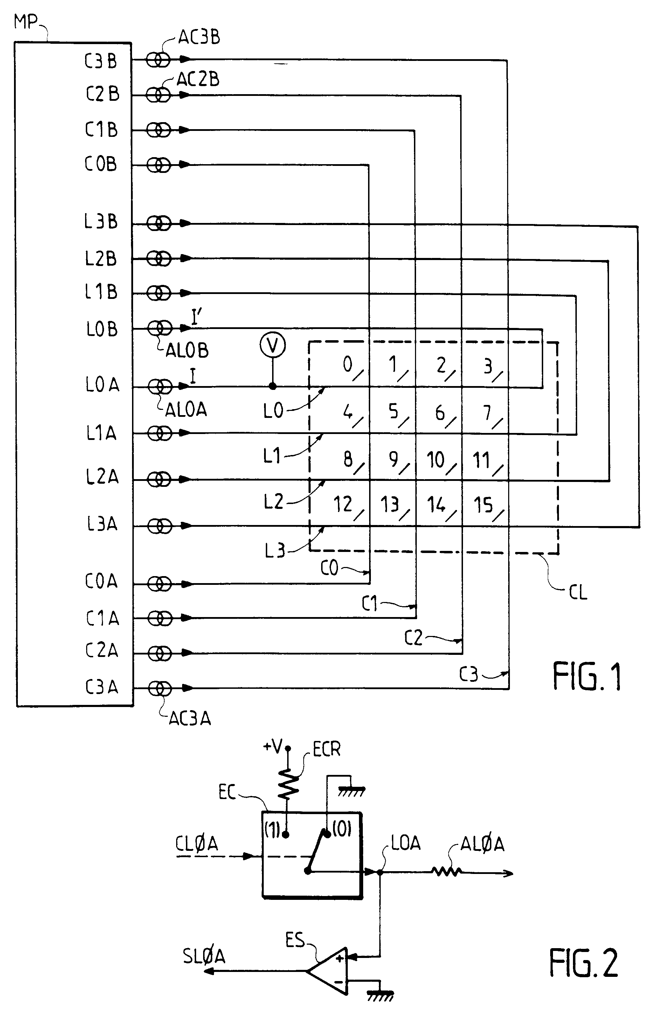

Sur la figure 1, le cadre en traits tiretés CL définit un clavier à 16 touches désignées par des numéros 0 à 15. Il peut s'agir de 10 touches numériques de 0 à 9, et de 5 touches alphanumériques ou de signes ou de commandes. Par commande, on entend par exemple la validation d'un code confidentiel, une fois frappé sur ce clavier.

Sous les touches, il est défini une matrice de quatre lignes L0 à L3 et de quatre colonnes C0 à C3. L'actionnement d'une touche va établir un contact électrique entre le conducteur de ligne et le conducteur de colonne associés à cette touche.

A côté de cela, un module protégé MP comprend un jeu de quatre bornes de lignes L0A à L3A et de quatre bornes de colonnes C0A à C3A. Par "module protégé", on entend un circuit intégré inviolable qui contient des moyens appropriés pour la reconnaissance d'un code confidentiel, avec chiffrement de toute information entrant ou sortant du module, y compris celles d'interfaces du type carte à puce, par exemple.

Selon l'invention, on y ajoute quatre autres bornes de lignes L0B à L3B et quatre autres bornes de colonnes C0B à C3B.

Dans la suite, lorsque le contexte le permet, on appelle "ligne" un conducteur de ligne, "colonne" un conducteur de colonne, et "conducteur" un conducteur qui peut être indifféremment de ligne ou de colonne.

De façon classique, on applique par exemple à l'une des bornes de ligne une tension de forçage à la masse. On met les bornes de colonnes à une tension différente à travers une résistance. Et l'on scrute les bornes de colonnes pour déterminer si le forçage à la masse s'est propagé sur l'un des conducteurs de colonnes. En ce cas, la touche actionnée est celle qui correspond à l'intersection de la ligne et de la colonne considérées.

Dans la Demande de Brevet français précitée 2 599 525, il est proposé notamment de pouvoir appliquer les mêmes tensions aussi bien aux bornes de lignes telles que L0A à L3A, qu'aux bornes de colonnes C0A à C3A. Ceci permet la simulation d'un court-circuit entre un conducteur de ligne et un conducteur de colonne, même si la touche n'est pas réellement actionnée.

Mais la Demanderesse a observé qu'une telle simulation présente une différence avec un véritable actionnement de touche: il ne passe aucun courant dans les conducteurs concernés.

A côté de cela, de nombreux autres problèmes se posent lorsqu'on cherche à effectuer une sécurisation aussi complète que possible du clavier.

A cet effet, l'invention propose tout d'abord que chaque conducteur de ligne et chaque conducteur de colonne soient à leurs deux extrémités reliés à une borne du module protégé MP.

En fait, l'invention commence à produire ses effets si un seul des conducteurs de lignes et colonnes est ainsi relié. Lorsque plusieurs conducteurs sont ainsi reliés, elle pourrait également produire ses effets si certains des conducteurs étaient reliés à une même borne du module protégé.

Cependant, la Demanderesse estime actuellement comme largement préférable que chaque extrémité de chaque conducteur de ligne et de colonne soit reliée à une borne qui lui est spécifique.

Ainsi, les conducteurs L0 à L3 sont respectivement montés entre les bornes L0A à L3A d'un côté et L0B à L3B de l'autre. De même, les conducteurs C0 à C3 sont montés entre les bornes C0A à C3A d'un côté et C0B à C3B de l'autre.

A côté de cela, il est prévu pour chaque extrémité de chaque conducteur un ajustement respectif, par un organe que l'on peut appeler "générateur de courant", et qui est représenté comme tel sur la figure 1. Cependant cet organe peut être simplement constitué d'une résistance de valeur choisie, comme les résistances AL0A pour la borne L0A, AL0B pour la borne L0B, et ainsi de suite, jusqu'à AC2B et AC3B pour les bornes C2B et C3B.

Il est maintenant fait référence à la figure 2. On considère la borne L0A et sa résistance AL0A. A l'intérieur du module MP, cette borne L0A est reliée tout d'abord à un élément de commande EC. L'élément EC, qui peut être réalisé de différentes manières, est schématisé comme un interrupteur commandé par un signal de commande CL0A. Suivant la valeur binaire de ce signal CL0A, la borne L0A est soit reliée à la masse (état 0), soit reliée à travers une résistance ECR à une tension positive + V (état 1). Dans l'état 0, la borne L0A est forcée à la masse. Elle ne peut donc indiquer l'état du conducteur L0 en aval de la résistance AL0A. Dans l'état 1, la borne L0A est par contre influencée par l'état du conducteur L0 en aval de la résistance AL0A. La résistance AL0A est faible, par rapport à la résistance ECR.

C'est ce qui va permettre une scrutation. A cet effet la borne L0A est reliée à un élément de scrutation ES, qui fournit un signal SL0A, lequel indique si le conducteur L0 est forcé à la masse, ou bien le siège d'une tension positive. Cet élément ES peut être schématisé comme un comparateur dont l'entrée positive est reliée à la borne L0A et l'entrée négative à la masse.

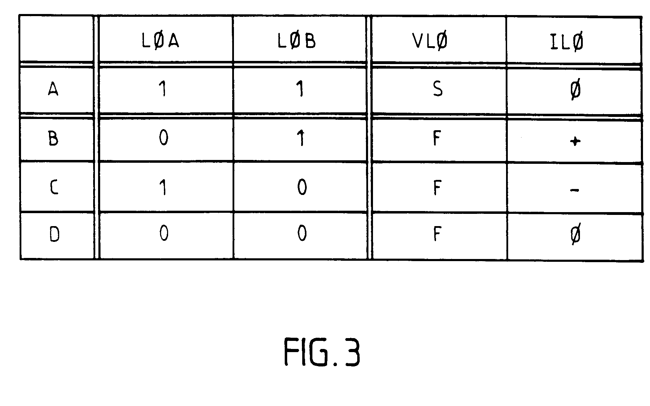

Il est maintenant fait référence à la figure 3. On considère toujours le conducteur L0, et les états de ses deux extrémités L0A et L0B. La figure 3 indique également la tension VL0 sur ce conducteur L0, et le courant IL0 qui le traverse.

Lorsque L0A et L0B sont tous deux à 1, la tension du conducteur L0 n'est pas forcée, et une scrutation est possible, comme indiqué par la lettre S dans la colonne L0. Le courant traversant ce conducteur est nul (sauf actionnement d'une touche).

Dans les trois états suivant le tableau de la figure 3, l'une au moins des extrémités L0A et L0B est forcée à 0. La tension VL0 est donc elle aussi forcée à 0 comme indiqué par la lettre F. Lorsqu'une seule des deux extrémités du conducteur L0 est forcée, il passe un courant IL0 de sens positif ou négatif comme indiqué par des signes sur la figure 3. Lorsque les deux extrémités du conducteur sont forcées à 0, il ne passe aucun courant au repos dans ce conducteur L0.

A partir de là, la Demanderesse a pu mettre au point des moyens extrêmement performants pour l'acquisition sur un clavier d'un code confidentiel, ou d'autres données confidentielles.

Il a tout d'abord été choisi qu'au repos, toutes les lignes et toutes les colonnes du clavier soient dans l'un des trois derniers états du tableau de la figure 3. Cela signifie que la tension sur les conducteurs de lignes et de colonnes est dans tous les cas forcée à 0. Cela signifie également qu'il va circuler dans ces conducteurs un courant positif (état B), ou négatif (état C) ou nul (état D).

En outre, en ajustant à des valeurs différentes les résistances telles que AL0A à AC3B, on peut donner à ces courants de nombreuses valeurs différentes. Ces courants n'ont pas de signification quant à l'état réel des touches du clavier.

Si l'on actionne une touche dans cette situation, il n'intervient donc pas de changement significatif de tension ou de courant dans les différents conducteurs.

De son côté, la première ligne du tableau de la figure 3 (état A) est l'état utilisé pour la scrutation ou interrogation du clavier. L'homme du métier observera que, lors d'une scrutation, concernant une touche non actionnée, le courant est nul, comme dans l'un (D) des états de forçage.

En conséquence, l'actionnement d'une touche ne peut être détecté ni par l'état de la ligne, car il existe un état normal (ou de simulation) identique à l'état de touche actionnée, ni par la valeur ou le sens du courant.

En outre, on peut ajuster les résistances telles que AL0A pour qu'il existe autant de valeurs de courant que d'extrémités de lignes et de colonnes. Ceci rend extrêmement difficile une tentative de fraude par surveillance de courant et/ou de tension.

En conséquence, au repos, tous les conducteurs de lignes et colonnes sont dans l'état de forçage avec des courants de valeur et de sens quelconques. Il en résulte d'une part que toutes les touches semblent actionnées (si un fraudeur se réfère, pour détecter l'actionnement d'une touche, au critère classique de forçage avec passage d'un courant). D'autre part, ceci interdit l'attaque du clavier par un forçage externe des conducteurs de la matrice pendant les phases de repos du module protégé.

Par exemple, on suppose qu'un fraudeur cherche à imposer des formes d'ondes aux conducteurs de lignes et colonnes par un dispositif externe branché au clavier. Dès lors que toutes les lignes et colonnes du clavier sont forcées à 0, le fraudeur devrait injecter des impulsions d'origine externe, qui devraient avoir un fort courant, s'il veut écarter le conducteur de l'état de forçage. Les résistances AL0A ou AL0B sont n'interviennent pas dans le cas d'une tentative de libération externe frauduleuse; la figure 2 montre que c'est l'interrupteur EC en position (0) qui engendre le forçage. Comme cet interrupteur a une très faible résistance interne, il faut donc un fort courant externe pour le "libérer".

A supposer qu'une telle manoeuvre de fraude soit tentée, l'invention permet de la traiter comme suit.

D'une part, il est possible, par un test lancé cycliquement, de détecter une telle attaque frauduleuse du clavier, par acquisition des états physiques des lignes et des colonnes, qui doivent tous rester à l'état de forçage.

D'autre part, ce mode d'attaque frauduleuse est destructeur, à cause des forts courants qu'il nécessite. Le matériel intégré au module protégé va dans la plupart des cas se trouver mis en court-circuit ou au contraire en circuit ouvert.

Dans le cas du court-circuit, la ligne ou la colonne ne peut plus être libérée pour scrutation. Cela se vérifie aisément, car une seule ligne ou colonne est détectée comme forcée, et ce pendant un temps donné (que l'on choisira supérieur au temps spécifié pour le rebond des touches).

Dans le cas du circuit ouvert, cet état est détecté de façon instantanée. En effet, une seule extrémité d'une ligne ou d'une colonne à l'état forcé va imposer cet état à l'autre extrémité. Un circuit ouvert sur l'une quelconque des extrémités va donc être vérifié par acquisition des états de deux extrémités, qui doivent tous deux être "forcé".

La mise en oeuvre de ces techniques de sécurité implique de prévoir des dispositifs de scrutation aux deux extrémités de chacun des conducteurs de lignes et de colonnes.

De façon analogue, si la continuité conductrice d'une ligne ou colonne est rompue, soit par coupure d'un fil due à une tentative de fraude, soit par une panne matérielle, cet état peut également être détecté : on obtiendra un résultat différent aux deux extrémités du conducteur en question.

Il convient maintenant de décrire le moyen utilisé selon l'invention pour détecter l'actionnement d'une touche. On va d'abord tester une ligne ou une colonne. Le test s'effectue en appliquant à ce conducteur de ligne ou de colonne le premier état de la figure 3, c'est-à-dire un état de libération aux deux extrémités. L'état physique d'au moins une extrémité est lu. Puis on retourne à l'état de forçage sur au moins une extrémité.

A partir de l'état normal, il y a donc une brève libération des deux extrémités, puis un retour à l'état normal.

Si ce conducteur de ligne ou de colonne supporte au moins une touche actionnée, il va rester à l'état normal, car tous les autres conducteurs de lignes et de colonnes sont forcés à l'une au moins de leurs extrémités (état normal), et il est relié à l'un d'entre eux par la touche actionnée.

Si au contraire aucune touche n'est actionnée, une impulsion de libération va être engendrée, en ce sens que le conducteur libéré va passer à l'état 1 brièvement. Mais cela ne signifie rien.

En conséquence, en effectuant ainsi une libération très brève d'un conducteur de ligne ou de colonne, de préférence à la vitesse maximale de travail du module protégé, on va tester la situation d'une ligne ou d'une colonne; la réponse positive (actionnement d'une touche) correspond à l'absence de tout changement. Ceci est un avantage extrêmement important de l'invention.

Bien entendu, la prise en compte d'un actionnement de touche va nécessiter deux accès, d'abord le test des lignes, puis si ce test est positif, le test des colonnes, ou inversement.

Il convient maintenant de s'intéresser au mode de fonctionnement des bornes ou "ports" d'entrée/sortie du module protégé MP. Ces ports peuvent être synchrones ou asynchrones.

Si les deux extrémités d'une ligne ou d'une colonne sont connectées à un port synchrone, leur état peut être changé au même instant. On passe donc instantanément de l'état ancien à l'état nouveau, à la fois en forme d'onde et en courant.

Inversement, les deux extrémités d'une ligne ou d'une colonne peuvent être connectées à deux ports asynchrones. Dans ce cas, leur état ne peut pas être changé au même instant. On ne peut donc pas toujours passer instantanément de l'état ancien à l'état nouveau.

On considère à nouveau la figure 3 :

- les changements d'état entre les lignes A et B, A et C, B et D, C et D du tableau de la figure 3 sont des changements d'état d'une seule extrémité. Il sont donc instantanés.
- Par contre, un changement d'état entre la ligne A et la ligne D, ou bien entre la ligne B et la ligne C, du tableau de la figure 3 nécessite de changer l'état des deux extrémités. Il n'est donc pas instantané, si du moins ces deux extrémités sont connectées sur deux ports asynchrones.

Lors du changement d'état en deux temps de l'état A vers l'état D, le conducteur de ligne en question va passer instantanément de l'état de libération à l'état de forçage, puisqu'il suffit pour cela de forcer l'une de ces extrémités. Le courant, initialement nul, va passer par un état intermédiaire de courant non nul de valeur aléatoire, pour redevenir nul. De l'état D vers l'état A, le conducteur de ligne reste tout d'abord forcé, avec un état intermédiaire de courant non nul, de valeur aléatoire, puis il est libéré, avec un courant nul.

Lors du changement d'état en deux temps de l'état B vers l'état C, le conducteur de ligne en question reste forcé, mais le courant passe par un état intermédiaire nul; il est impératif, lors de ce changement d'état, de passer par l'état intermédiaire D, pour ne pas libérer de façon intempestive le conducteur de ligne considéré.

Les états intermédiaires tels que décrits ci-dessus n'affectent en rien la sécurité du clavier selon l'invention, car d'une part leur durée est extrêmement réduite, et d'autre part ces états, qui n'apportent aucune information supplémentaire, ne peuvent qu'engendrer une confusion plus importante du fraudeur lors d'une tentative de fraude.

En d'autres termes, les moyens de l'invention n'imposent pas de synchronisme entre les commandes des extrémités des lignes et des colonnes. Elles peuvent donc être connectées de façon quelconque sur plusieurs ports asynchrones. Il en résulte qu'il n'y a pas de limitation technologique au nombre de lignes et de colonnes de la matrice que l'on va explorer, puisqu'on peut utiliser toutes les broches disponibles sur le module protégé utilisé.

Cela signifie que l'invention permet de traiter des claviers protégés de grande taille, si on le désire.

A fortiori, l'invention permet que le module protégé traite un grand clavier, dont seulement une partie est traitée de façon sécurisée selon l'invention.

La partie non sécurisée du clavier peut être néanmoins traitée avec une sécurité importante, mais pas autant que la partie sécurisée. Par sécurité importante, on entend par exemple le contrôle de l'intégrité et de la continuité des conducteurs de lignes ou de colonnes, qui va s'appliquer à tout le clavier.

Mieux encore, le module protégé de la présente invention est compatible avec des claviers anciens qui ne comportent pas d'accès aux deux extrémités de leurs conducteurs de lignes ou de colonnes. Dans ce cas, il suffit d'actionner le module dans une phase de test pour détecter si une seule des extrémités répond ou si les deux répondent, et la configuration de connexion de l'ensemble du clavier est mémorisée dans un tableau de définition du câblage.

En son principe général, la mise en oeuvre de l'invention s'effectue de la façon indiquée ci-après.

Au repos, toutes les lignes et les colonnes sont dans l'état de forçage, c'est-à-dire dans l'un des trois derniers états du tableau de la figure 3. L'état physique d'une touche va être déterminé en considérant successivement une ligne et une colonne, dans un ordre quelconque, pourvu que cela s'effectue dans un laps de temps compatible avec la vitesse de frappe de l'usager.

Dès lors qu'on ne libère à un instant donné qu'une seule ligne ou qu'une seule colonne, une touche actionnée va nécessairement produire un état de forçage à la fois sur la ligne et sur la colonne qui lui sont associées.

On va donc commencer par tester soit les conducteurs de lignes soit les conducteurs de colonnes. Le choix des lignes ou des colonnes, et le choix de l'ordre de libération des conducteurs de lignes et des conducteurs de colonnes se font de façon quasi-aléatoire, en évitant de commuter trop systématiquement les unes aux autres.

Il peut se produire que l'usager appuie sur plusieurs touches à la fois. Bien que la présente invention puisse permettre de gérer une telle situation, il est considéré comme préférable de ne pas gérer les appuis de touches multiples, qui vont à l'encontre de la sécurité. La solution habituelle est d'autoriser plusieurs essais pour la frappe de données confidentielles.

En fin de libération d'une ligne ou d'une colonne, un tirage au sort va déterminer lequel des trois derniers états de la figure 3 est appliqué à ce conducteur.

Si un conducteur de ligne ou de colonne libéré (au niveau de la commande) se trouve néanmoins en état de forçage (au niveau de la scrutation), c'est qu'il existe une touche actionnée correspondant à cette ligne ou colonne. Dans ce cas, on parcourt les autres lignes (ou colonnes), en leur appliquant par tirage au sort un des trois derniers états de la figure 3, mais sans les libérer à leurs deux extrémités. On passe ensuite à la libération des colonnes (respectivement, des lignes) en appliquant le même mécanisme.

Pour compliquer encore les choses vis-à-vis d'une tentative de fraude, on peut à tout moment mettre en oeuvre une phase dite de "variation de courant", consistant à faire changer les états des extrémités des conducteurs de lignes et de colonnes, toujours parmi les trois derniers états de la figure 3.

Après avoir terminé la ligne et la colonne concernées, on sait quelle touche est enfoncée.

Il faut maintenant tester son relâchement, et ce en fournissant le moins d'informations apparentes possible.

Le plus simple serait alors de tester cycliquement l'état de sa ligne ou de sa colonne, que l'on libère sans phase de variation de courant. Tant que la touche n'est pas relâchée, aucune forme d'onde n'est engendrée, ce qui est détecté par scrutation.

Cependant, lors de ce test cyclique d'une ligne (colonne), seul le courant de la ligne (colonne) testée risque de varier, ce qui peut constituer une indication pour le fraudeur. Pour éviter cela, et à chaque cycle de test de la ligne (colonne) choisie, on fait varier le courant de façon aléatoire sur les autres lignes (colonnes), sans les libérer, ainsi que sur la ligne (colonne) testée.

Dans ce qui précède, pendant la phase de scrutation des lignes et des colonnes, on sait combien de lignes et combien de colonnes n'ont pas été libérées, lors d'une phase d'acquisition d'une touche. On note Lx et Cy l'identité de la ligne et de la colonne de la touche détectée comme actionnée. On note n le nombre de lignes qui n'ont pas été libérées, m le nombre de colonnes qui n'ont pas été libérées.

Pour aller plus vite, et améliorer la confidentialité et la sécurité, le test de relâchement de la touche va s'effectuer sur la colonne concernée Cy si n est supérieur ou égal à m, ou sur la ligne concernée Ix si n est inférieur à m. (Le cas n = m est indifférent.)

Enfin, indépendamment des essais de simulation liés aux variations de courant et divers états de forçage décrits jusqu'à présent, on peut effectuer aussi une simulation de touche de façon classique, à des moments judicieux. A cet effet, on libère tous les conducteurs de lignes et de colonnes de la matrice sauf une ligne et une colonne, et ce pendant le temps moyen d'actionnement d'une touche par l'usager.

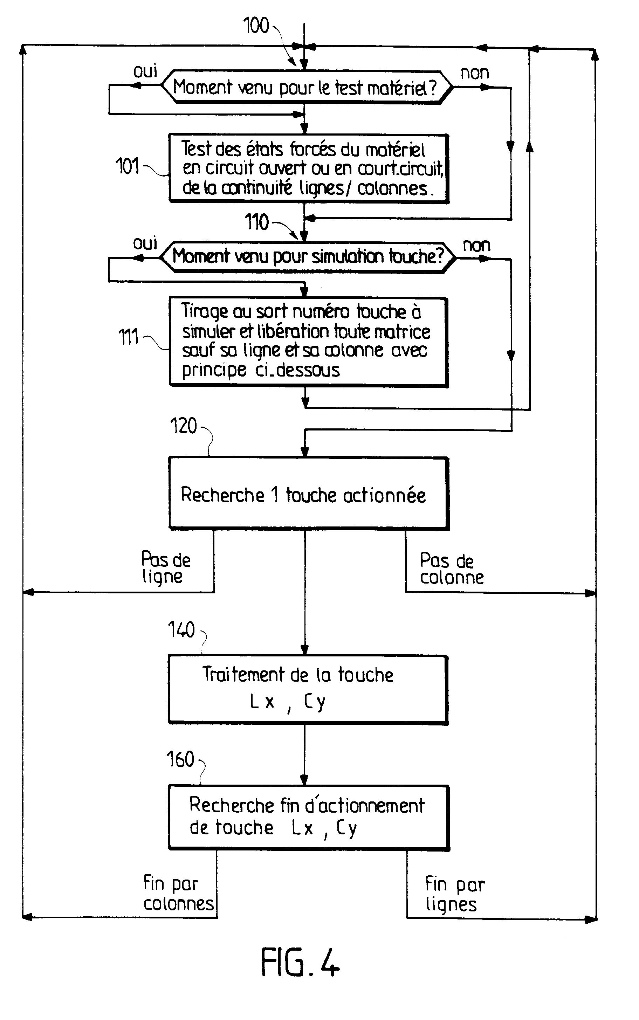

Il est maintenant fait référence aux figures 4 à 7 pour la description d'un exemple particulier de mise en oeuvre de l'invention.

Le mécanisme général de la figure 4 comporte une étape 100 qui détermine si le moment est venu pour effectuer un test matériel de l'unité de clavier de sécurité. Si ce moment est venu, l'étape 101 effectue un test des états forcés des conducteurs de lignes et de colonnes. On teste également si les lignes et colonnes ainsi que les bornes du module protégé sont en circuit ouvert ou en court-circuit, ainsi que la continuité des conducteurs de lignes et de colonnes.

Ensuite, l'étape 110 détermine si le moment est venu de simuler l'actionnement classique d'une touche. Si oui, l'étape 111 va tirer au sort un numéro de touche à simuler, et libérer séquentiellement, dans un ordre tiré au sort, tous les conducteurs de lignes et de colonnes de la matrice, sauf le conducteur de ligne et le conducteur de colonne qui correspondent à la touche que l'on désire simuler.

Après cela, on passe à une phase globale 120 qui est la recherche d'une touche actionnée, que l'on décrira ci-après. Si une touche a été déterminée, l'étape 140 consiste en le traitement de la touche Lx, Cy dont il s'agit, à l'intérieur du module protégé, et de façon classique. Ce traitement peut être considéré comme connu de l'homme du métier. Il peut éventuellement commencer par un test de confirmation de la touche actionnée (anti-rebond mécanique).

Enfin, la phase globale 160 va rechercher la fin d'actionnement de la touche Lx, Cy.

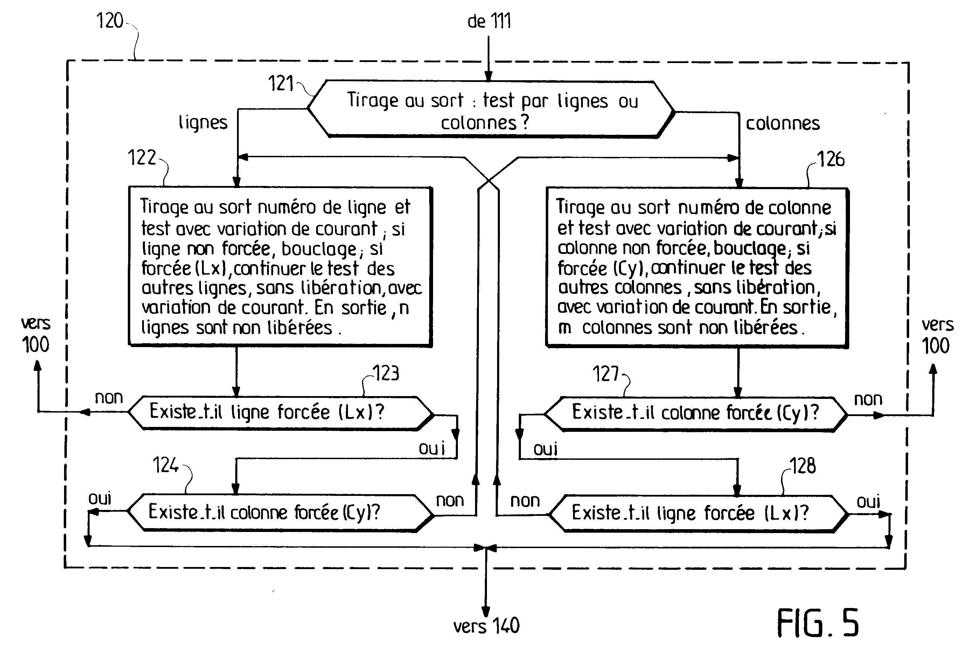

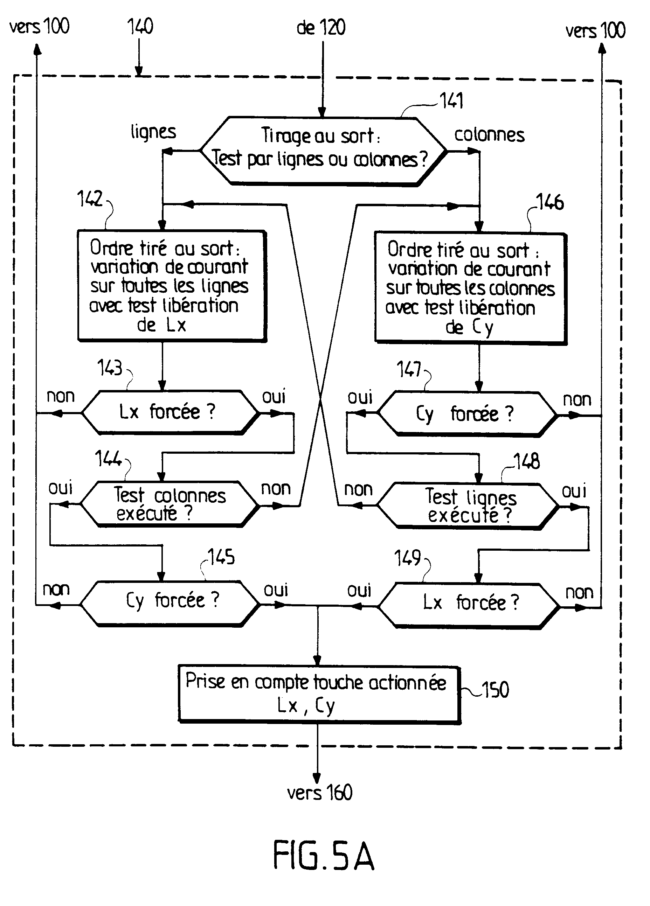

La phase globale 120 est détaillée sur la figure 5.

Sa première étape 121 consiste en un tirage au sort pour déterminer si l'on va commencer le test par ligne ou par colonne. On suppose que l'on commence par ligne.

Dans ce cas, l'étape 122 consiste à tirer au sort un numéro de ligne, et à libérer les deux extrémités de celle-ci. Si la ligne libérée ne correspond pas à une touche actionnée, elle va passer à l'état 1, c'est-à-dire ne pas rester forcée. Elle est alors de nouveau forcée, en lui appliquant l'un des trois derniers états du tableau de la figure 3, choisi par tirage au sort, et l'on recommence l'étape 122, jusqu'à libérer toutes les lignes.

Si au contraire la ligne libérée ne change pas d'état, c'est qu'elle est forcée par le fait que la touche actionnée relie cette ligne à l'une des colonnes. Dans ce cas, on note Lx l'identité de cette ligne. Elle est alors de nouveau forcée, en lui appliquant l'un des trois derniers états du tableau de la figure 3, choisi par tirage au sort. On applique alors sur les lignes restantes, dans un ordre tiré au sort, une variation de courant aléatoire, sans libérer leurs deux extrémités.

Dans ce qui précède, l'expression "tirage au sort" signifie soit que l'on tire au sort au départ un ordre d'examen de l'ensemble des lignes, soit que l'on effectue à chaque fois un nouveau tirage au sort, en excluant les lignes déjà traités.

En sortie de l'étape 122, on aura donc parcouru tous les conducteurs de lignes. On note n le nombre de conducteurs de lignes, scrutés ou non, qui n'ont pas été libérés.

Satisfont cette condition : le conducteur Lx demeuré forcé à cause de l'actionnement de la touche, ainsi que les suivants, car ils n'ont pas été libérés du tout. Le nombre n est donc égal au nombre total de lignes, moins le nombre de lignes qui ont été scrutées comme "libérées", avant d'arriver au conducteur de ligne Lx correspondant à la touche actionnée.

Après l'étape 122, l'étape 123 détermine si l'on a effectivement trouvé un conducteur de ligne Lx correspondant à une touche actionnée. Si cette condition n'est pas vérifiée, on retourne à l'étape 100. Si elle l'est, l'étape 124 détermine s'il a été trouvé précédemment un conducteur de colonne Cy correspondant à une touche actionnée. Si cette détermination a été faite, on connaît complètement la touche actionnée, et l'on passe à l'étape 140 de la figure 4.

Sinon, il faut rechercher quelle colonne correspond à la touche actionnée et l'on passe à l'étape 126. Cette étape 126 est identique à l'étape 122, sauf que ce sont des conducteurs de colonnes que l'on va libérer. La colonne qui, au moment de sa libération, ne va pas changer d'état, est notée Cy (s'il existe une telle colonne). Et en sortie de l'étape 126, on obtiendra un nombre m indiquant le nombre de colonnes non libérées comme le faisait n pour les lignes.

Après l'étape 126, le test 127 détermine si l'on a bien trouvé une colonne Cy (un rebond mécanique peut faire que l'on ne trouve pas de Cy après avoir établi une ligne Lx; la touche sera alors détectée au prochain cycle).

S'il existe une ligne forcée Lx, l'étape 128 passe à l'étape 140. Sinon on passe à l'étape 122. La sortie de l'étape 127 est un retour vers l'étape 100, comme c'était le cas pour l'étape 123.

A l'étape 140, le traitement de la touche actionnée Lx, Cy est exécuté. il peut éventuellement commencer par un test de confirmation de cette touche. Dans un ordre tiré au sort, un des trois derniers états du tableau de la figure 3 est appliqué aux colonnes (étape 146, figure 5A), tandis que Cy subit un test (146) de libération supplémentaire (confirmation de son état forcé). Le même processus est appliqué aux lignes (142) et à Lx (143). L'ordre colonnes, lignes, ou inverse est tiré au sort (141, 144, 148).

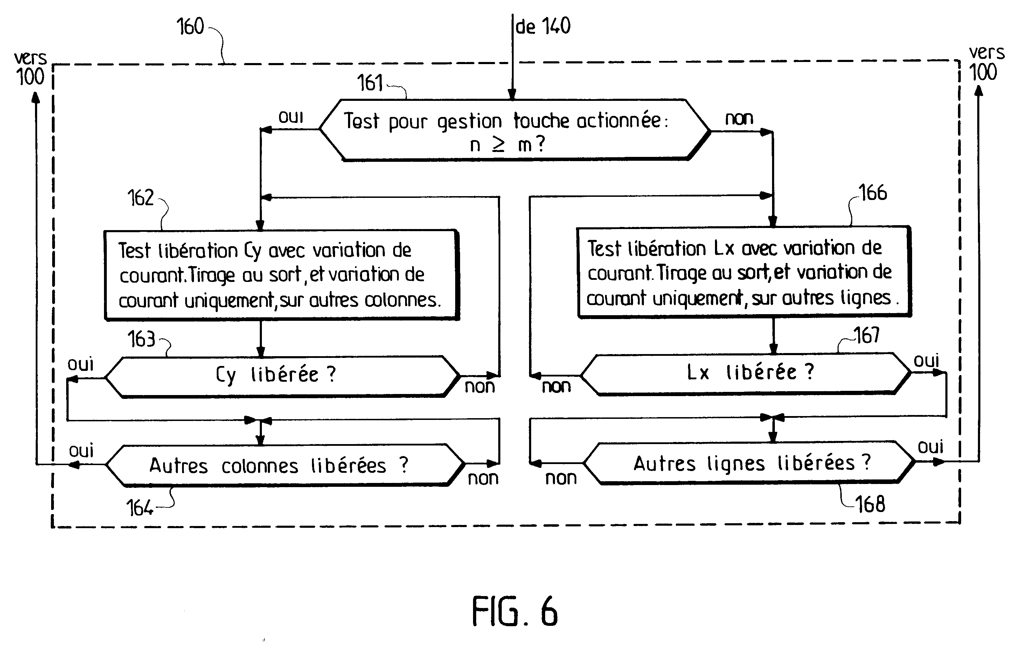

Si l'état de forçage est confirmé sur Lx (149) et Cy (145), le traitement (150) de la touche actionnée est exécuté, et l'on passe à la phase 160, qui va être maintenant décrite en référence à la figure 6; sinon, on revient au point 100.

L'étape 161 est un test pour comparer les nombres n et m. Si n est supérieur à m, on va tester la fin d'actionnement de la touche par les conducteurs de colonnes. Dans le cas contraire, on va faire ce test par les conducteurs de lignes.

A l'étape 162, un test de libération de la colonne Cy est appliqué, avec variation de courant aléatoire, tandis que les autres colonnes reçoivent un des trois derniers états du tableau de la figure 3. La fin d'actionnement de la touche est détectée par le fait que, au moment de la libération du conducteur de colonne Cy, celui-ci va passer à l'état libéré (étape 163).

Après cela, on passe de préférence par une étape 164 qui consiste à libérer aussi les autres colonnes, pour bien vérifier qu'aucune d'entre elles ne correspond à un état de touche actionnée. Normalement, aucune des autres colonnes ne doit correspondre à une touche actionnée, c'est-à-dire que lorsqu'on va les libérer brièvement, elles doivent changer d'état.

Ceci présente plusieurs avantages, d'une part quant à des mauvaises manoeuvres de l'usager, d'autre part quant à des tentatives de fraude. En effet, pendant tout le temps d'actionnement de la touche, strictement aucune forme d'onde n'apparaît sur les conducteurs des lignes et des colonnes; un des deux groupes (lignes ou colonnes) subit par tirage au sort une variation aléatoire de courant, tandis que l'autre est dans un état statique aléatoire. Pour parfaire la sécurité, une variation de courant aléatoire pourrait être appliquée au groupe de conducteurs non touché (colonnes ou lignes, respectivement).

Les étapes 166 à 168 font la même chose, mais dans le cas où n est inférieur à m, c'est-à-dire que l'on va détecter la fin d'actionnement d'une touche par les conducteurs de lignes.

Sur la figure 4, la sortie de la phase globale 160 s'effectue donc par deux voies, suivant que l'on teste la fin d'actionnement d'une touche par colonne ou par ligne. On retourne dans tous les cas à l'étape 100.

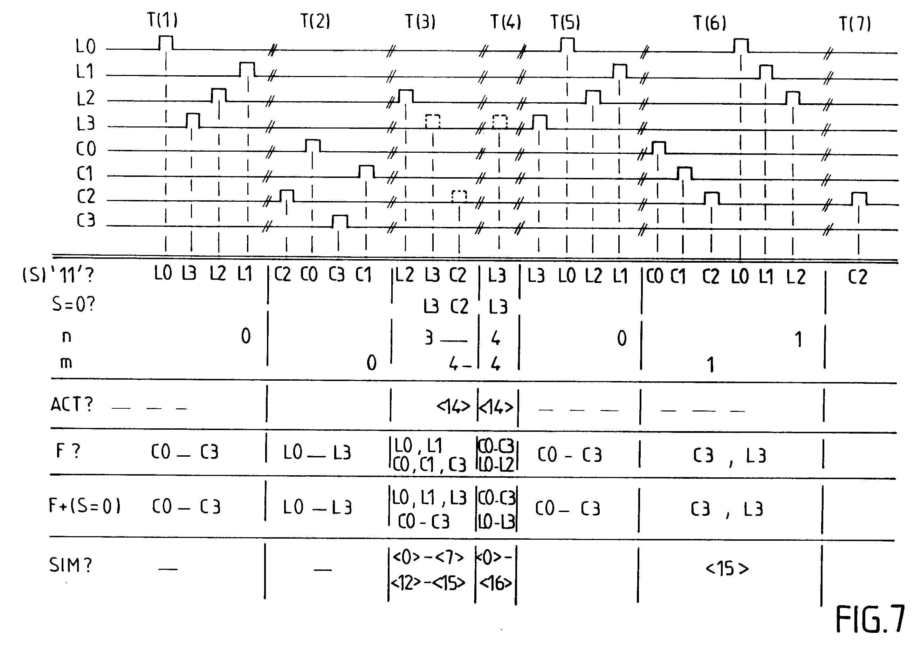

La figure 7 illustre, sur un exemple en sept temps notés T(1) à T(7), un exemple particulier d'application de l'invention.

Les huit premières lignes L0 à L3 et C0 à C3 illustrent la tension sur le conducteur de ligne ou de colonne concerné, avec un niveau bas pour l'état 0 ou forcé et un niveau haut pour l'état 1 libéré.

Ensuite, la notation est la suivante :

- la ligne "(S)='11' ?" indique lequel des conducteurs de lignes ou de colonnes possède ses deux extrémités à l'état 1. Un tel conducteur est libéré et autorise la scrutation (S).
- La ligne suivante "S = O ?" indique le conducteur de ligne ou de colonne pour lequel, lors de cette scrutation, il n'a pas été observé de changement d'état (ligne ou colonne correspondant à une touche actionnée).
- Les deux lignes suivantes indiquent les valeurs des nombres n et m déjà décrits.
- La ligne "ACT ?" indique le numéro de la touche actionnée, le cas échéant.
- La ligne "F ?" indique les conducteurs qui sont restées commandées à l'état forcé pendant la période ou temps considéré.
- La ligne "F + (S = 0)" indique les conducteurs qui ont été soit forcés, soit libérés mais sont restés à l'état forcé du fait qu'ils correspondent à une ligne ou colonne de touche actionnée.
- Enfin, la ligne "SIM ?" indique quelles touches peuvent être considérées comme simulées (conformément aux techniques classiques de surveillance de clavier) par le fait que leurs conducteurs de lignes et leurs conducteurs de colonnes se sont trouvés en même temps à l'état forcé.

Pendant le temps T1, on libère successivement les conducteurs de lignes L0, L3, L2, L1 (ordre tiré au sort). Il y a changement d'état à chaque fois. n est égal à 0. Les colonnes C0 et C3 sont restées à l'état forcé. Aucune touche n'est simulée car toutes les lignes ont changé d'état pendant ce temps T1.

Pendant le temps T2, les conducteurs de colonnes C2, C0, C3, C1 sont successivement libérés. Tous changent d'état pendant cette libération. m = 0. Les conducteurs de lignes L0 à L3 sont restés à l'état forcé. Comme précédemment aucune touche n'est simulée.

Pendant le temps T3, l'ordre est tiré au sort, et L2, L3, L0, L1. Mais, à la libération de la ligne L3, il n'y a aucun changement d'état. Le conducteur de ligne L3 correspond donc à la ligne d'une touche actionnée (Lx = L3). Seront restées, par commande, à l'état forcé, les lignes L0 et L1. En outre, la ligne L3 a été libérée, mais est restée forcée à cause de l'actionnement d'une touche. C'est pourquoi on a n = 3. Ensuite, dans le même temps, on passe aux colonnes, dans l'ordre C2, C1, C3, C0 par exemple. A la libération de la colonne C2, aucun changement d'état ne se produit. C'est donc la colonne C2 qui correspond à la touche actionnée. On sait alors que cette touche actionnée est la touche ⟨14⟩.

Les colonnes C0, C1 et C3 n'ont pas été libérées par commande. La colonne C2 a été libérée par commande mais est restée forcée. Les quatre conducteurs de colonnes sont donc restés forcés et m = 4.

Il en résulte que l'on va tester la fin d'actionnement d'une touche par les conducteurs de lignes, car m > n.

Au passage, on observera que les lignes L0, L1, L3 et toutes les colonnes C0 à C3 n'ont pas changé d'état pendant le temps T3. Ceci correspond à l'actionnement de 12 touches, à savoir les touches ⟨0⟩ à ⟨7⟩ et ⟨12⟩ à ⟨15⟩.

Pour alléger le dessin, l'exploration des lignes après L3 et des colonnes après C2 n'a pas été représentée dans le temps T3. Il est clair que cette exploration existe, conformément au mécanisme décrit à propos des figures 4 à 6.

Suivant la même convention de simplification du dessin, le temps T4, sur la représentation, est réduit à la seule analyse de la ligne L3. Mais il est clair que l'on va explorer toutes les lignes, mais en libérant seulement les deux extrémités de la ligne L3. Celle-ci ne change pas d'état. En conséquence, n = 4 et m = 4.

Corrélativement, tous les conducteurs C0 à C3 et L0 à L3 sont restés à l'état forcé. En dernière ligne de la figure 7 pour le temps T4, ceci correspond à une simulation de l'actionnement de toutes les touches du clavier.

Au temps suivant T5, qui commence par l'analyse de la ligne L3, il apparaît par contre que, lors de la libération de la touche L3, celle-ci change d'état. L'actionnement de la touche ⟨14⟩ est donc terminé.

Dans ce cas, on va effectivement libérer les autres lignes L0, L2 et L1, dans un ordre tiré au sort.

n est égal à 0. Pendant ce temps T5, toutes les colonnes sont restées à l'état forcé, et aucune simulation de touche n'est produite.

Pendant le temps T6, on va faire une phase de simulation de touche. Ceci s'effectue de la manière suivante :

Les colonnes C0, C1, C2 sont libérées successivement, puis les lignes L0, L1, L2 successivement (l'ordre peut être aléatoire). On a alors n = 1 et m = 1. Les conducteurs de colonnes C3 et de lignes L3 sont restés à l'état forcé pendant ce temps. Ceci correspond donc à une simulation de l'actionnement de la touche ⟨15⟩.

A l'étape T7, on peut reprendre le processus de la même manière qu'au temps T1, mais en commençant cette fois par les colonnes.

Bien entendu, il n'est pas nécessaire pour toutes les applications de mettre en oeuvre complètement les dispositions de sécurité ci-dessus décrites. Celles-ci sont d'ailleurs susceptibles de variantes. Par exemple, on pourrait envisager de commencer la véritable interrogation toujours par les lignes, ou toujours par les colonnes.

## Revendications

1. Unité à clavier de sécurité, comprenant:
   - un clavier (CL) comportant une matrice de conducteurs de lignes et colonnes (L0-L3, C0-C3), et des touches (⟨0⟩-⟨15⟩) dont l'actionnement produit un contact ligne/colonne spécifique, et
   - un module protégé (MP), muni de bornes bidirectionnelles (L0A-L3A, C0A-C3A) respectivement reliées individuellement aux conducteurs de lignes et colonnes,
   - ce module étant capable de placer chaque borne dans un état libéré (1) qui permet la scrutation, ou dans un état de forçage (0), et possédant un état d'interrogation du clavier, où il libère et scrute une borne de l'un des jeux (colonnes ou lignes, respectivement) tout en forçant une borne de l'autre jeu (lignes ou colonnes, respectivement), ainsi qu'un état de simulation où il force au moins une borne dans l'un et l'autre desdits jeux, caractérisé en ce que le module (MP) comprend, pour au moins l'un (L0) des conducteurs de ligne ou colonne, deux bornes (L0A,L0B) reliées, aux deux extrémités de ce conducteur, ces deux bornes étant susceptibles de libération ou de forçage, et au moins l'une d'entre elles étant susceptible de scrutation, ce qui permet de faire passer un courant dans ce conducteur indépendamment de l'actionnement des touches, y compris pendant la simulation.

2. Dispositif selon la revendication 1, caractérisé en ce que chacun des conducteurs de ligne (L0-L3) et colonne (C0-C3) est relié par ses deux extrémités, avec ajustement de courant, à deux bornes différentes du module.

3. Dispositif selon la revendication 2, caractérisé en ce que les deux bornes sont différentes pour chacun des conducteurs.

4. Dispositif selon l'une des revendications 2 et 3, caractérisé en ce que les ajustements de courant sont différents pour chacune des extrémités de chacun des conducteurs.

5. Dispositif selon l'une des revendications 2 à 4, caractérisé en ce que le module (MP) applique normalement à chaque conducteur de ligne et de colonne l'un des trois états (B,C,D) comportant un forçage à au moins une extrémité de ce conducteur, l'actionnement d'une touche ne produisant pas de changement détectable en tension ou en courant.

6. Dispositif selon la revendication 5, caractérisé en ce que le choix dudit état parmi les trois est sensiblement aléatoire.

7. Dispositif selon l'une des revendications 5 et 6, caractérisé en ce que l'interrogation (120) comprend la libération brève (A) des deux extrémités d'un seul conducteur choisi de ligne ou colonne, avec scrutation de ce conducteur, l'absence de changement d'état de ce conducteur pendant sa libération brève indiquant l'actionnement de l'une des touches qui lui sont associées, tandis qu'un changement d'état n'indique rien sur l'actionnement du clavier.

8. Dispositif selon la revendication 7, caractérisé en ce que le choix de la ligne ou colonne interrogée est sensiblement aléatoire, au moins en l'absence de détection de touche actionnée.

9. Dispositif selon l'une des revendications 7 à 8, caractérisé en ce qu'il est prévu un état (160) de détection de la fin d'actionnement d'une touche.

**10.** Dispositif selon l'une des revendications 2 à 9, caractérisé en ce qu'il est prévu une scrutation (ES) aux deux extrémités de chacun des conducteurs de ligne et colonne, ce qui permet de détecter des coupures du conducteur, ainsi qu'une libération frauduleuse ou un forçage frauduleux de l'une de ses extrémités.

**11.** Dispositif selon l'une des revendications 2 à 10, caractérisé en ce que les bornes du module sont pilotées de façon asynchrone.

**12.** Dispositif selon l'une des revendications 2 à 11, caractérisé en ce que le module possède en outre un état de simulation (111) où il laisse à l'état forcé seulement une ligne et une colonne du clavier, à l'une, au moins, de leurs extrémités.

**13.** Dispositif selon l'une des revendications 1 à 12, caractérisé en ce que le module possède en outre un état de test (101), avec détection de l'état initial de branchement des extrémités de chacune des lignes et colonnes du clavier.

**14.** Dispositif selon l'une des revendications précédentes, caractérisé en ce que le dit clavier est une partie protégée d'un clavier d'usage général.

FIG.1

FIG.2

| | LØA | LØB | VLØ | ILØ |
|---|---|---|---|---|
| A | 1 | 1 | S | Ø |
| B | 0 | ↑ | F | + |
| C | 1 | 0 | F | - |
| D | 0 | 0 | F | Ø |

# FIG. 3

100

oui ⟨ Moment venu pour le test matériel? ⟩ non

101 — | Test des états forcés du matériel en circuit ouvert ou en court.circuit, de la continuité lignes/ colonnes. |

110

oui ⟨ Moment venu pour simulation touche? ⟩ non

111 — | Tirage au sort numéro touche à simuler et libération toute matrice sauf sa ligne et sa colonne avec principe ci..dessous |

120

| Recherche 1 touche actionnée |

Pas de ligne                     Pas de colonne

140

| Traitement de la touche L x , C y |

160

| Recherche fin d'actionnement de touche  L x , C y |

Fin par colonnes                     Fin par lignes

# FIG. 4

EP 0 573 719 A1

de 111

120

121 — Tirage au sort : test par lignes ou colonnes ?

lignes

colonnes

122

Tirage au sort numéro de ligne et test avec variation de courant ; si ligne non forcée, bouclage ; si forcée (Lx), continuer le test des autres lignes, sans libération, avec variation de courant. En sortie , n lignes sont non libérées .

126

Tirage au sort numéro de colonne et test avec variation de courant; si colonne non forcée, bouclage; si forcée (Cy), continuer le test des autres colonnes , sans libération, avec variation de courant. En sortie, m colonnes sont non libérées .

vers 100

non — 123 Existe_t_il ligne forcée (Lx)? — oui

127 — Existe_t_il colonne forcée (Cy)? — non

vers 100

oui — 124 Existe_t_il colonne forcée (Cy)? — non

non — 128 Existe_t_il ligne forcée (Lx)? — oui

vers 140

FIG. 5

**vers 100** ← 140 → **de 120** → **vers 100**

141 — Tirage au sort : Test par lignes ou colonnes ?
- lignes
- colonnes

142 — Ordre tiré au sort : variation de courant sur toutes les lignes avec test libération de Lx

146 — Ordre tiré au sort : variation de courant sur toutes les colonnes avec test libération de Cy

143 — Lx forcée ? (non / oui)

147 — Cy forcée ? (oui / non)

144 — Test colonnes exécuté ? (oui / non)

148 — Test lignes exécuté ? (non / oui)

145 — Cy forcée ? (non / oui)

149 — Lx forcée ? (oui / non)

150 — Prise en compte touche actionnée Lx , Cy

**vers 160**

FIG. 5A

FIG. 6

FIG.7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-0 375 546 (BULL)<br>* abrégé; figures 1,2 *<br>* colonne 3, ligne 41 -,colonne 7, ligne 21 *<br>--- | 1 | H03M11/00<br>G06F1/00<br>G07F7/10 |
| A | EP-A-0 248 712 (DASSAULT)<br>* abrégé; figures 5-6 *<br>* colonne 6, ligne 44 - colonne 11, ligne 62 * | 1 | |
| D | & FR-A-2 599 525<br>--- | | |
| A | EP-A-0 368 520 (NCR)<br>* abrégé; figure 1 *<br>--- | 1 | |
| A | GB-A-2 223 115 (BOLLMANN)<br>* abrégé; figure 1 *<br><br>----- | 1 | |

| | | | DOMAINES TECHNIQUES RECHERCHES (Int. Cl.5 ) |
|---|---|---|---|
| | | | H03M<br>G06F<br>G07F |

Le présent rapport a été établi pour toutes les revendications

| Lieu de la recherche | Date d'achèvement de la recherche | Examinateur |
|---|---|---|
| BERLIN | 18 FEVRIER 1993 | SAAM C. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
 .........................................................................
& : membre de la même famille, document correspondant

EPO FORM 1503 03.82 (P0402)